# EUROPEAN PATENT APPLICATION

(11) **EP 4 842 064 A1**
(43) Date of publication of application: **18.11.2026**
(21) Application number: 25754583.0
(22) Date of filing: 07.02.2025
(51) Int. Cl.: H04W 36/36, H04L 41/16, G06N 20/00, H04W 36/00, H04W 36/30

(54) **METHOD AND DEVICE FOR CONDITION-BASED HANDOVER USING ARTIFICIAL INTELLIGENCE AND MACHINE LEARNING IN WIRELESS COMMUNICATION SYSTEM**

(30) Priority: 16.02.2024 KR 20240022591
(71) Applicant: Samsung Electronics Co., Ltd., Suwon-si, Gyeonggi-do 16677 (KR)
(72) Inventor: JEONG, Seungbeom, Suwon-si Gyeonggi-do 16677 (KR); LEE, Taeseop, Suwon-si Gyeonggi-do 16677 (KR); BAEK, Sangkyu, Suwon-si Gyeonggi-do 16677 (KR); JO, Younghoon, Suwon-si Gyeonggi-do 16677 (KR)
(74) Representative: Gulde & Partner
(86) International application number: PCT/KR2025/001841
(87) International publication number: WO 2025/173994

(57) **Abstract**

The disclosure relates to a 5G or 6G communication system for supporting a higher data transmission rate. A method of a terminal in a wireless communication system according to an embodiment of the present disclosure comprises the steps of: receiving, from a source base station, conditional handover configuration information including at least one candidate base station for conditional handover and a conditional handover execution condition including a measurement-based condition and a prediction-based condition for each candidate base station; determining, as a target base station, a candidate base station satisfying both the measurement-based condition and the prediction-based condition among the at least one candidate base station; and performing handover to the target base station.

## Description

### [Technical Field]

The disclosure relates to operations of a terminal and a base station in a mobile communication system. Specifically, the disclosure relates to a method for a handover in a wireless communication system and a device capable of performing same.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz (THz) bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

### [Disclosure of Invention]

### [Technical Problem]

The disclosure is to provide a device and a method capable of effectively providing services in a mobile communication system.

The disclosure aims to introduce an AI/ML algorithm-based handover mechanism and to improve overall performance and stability of a network in order to resolve problems of an existing reactive handover which may occur in a high-density microcell environment and a high-mobility environment.

### [Solution to Problem]

A method of a UE in a wireless communication system according to an embodiment of the disclosure includes: receiving, from a source base station, conditional handover configuration information including at least one candidate base station for a conditional handover and a conditional handover execution condition including a measurement-based condition and a prediction-based condition for each candidate base station; determining, as a target base station, a candidate base station that satisfies both the measurement-based condition and the prediction-based condition among the at least one candidate base station; and performing a handover to the target base station.

### [Advantageous Effects of Invention]

According to Various embodiments of the disclosure, a device and a method capable of effectively providing services in a mobile communication system are provided.

According to various embodiments of the disclosure, it is possible to enhance efficiency of a handover process, enable proactive responses before a problem occurs, and improve network operation and configuration determination as well as radio resource management performance.

### [Brief Description of Drawings]

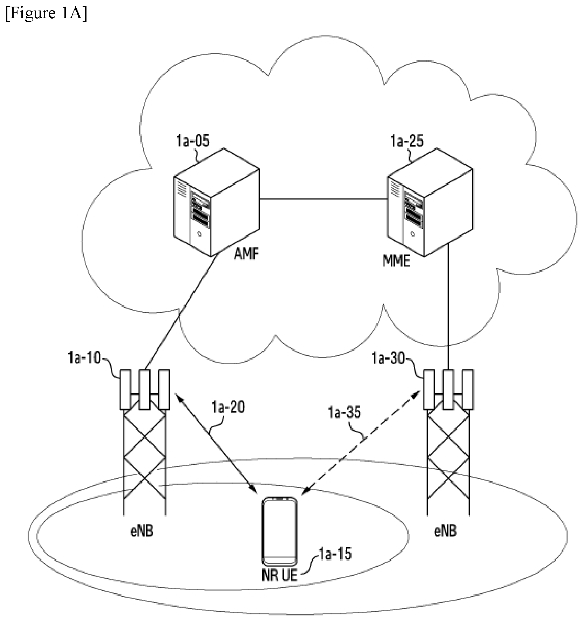

FIG. 1A illustrates a structure of a mobile communication system according to an embodiment of the disclosure.

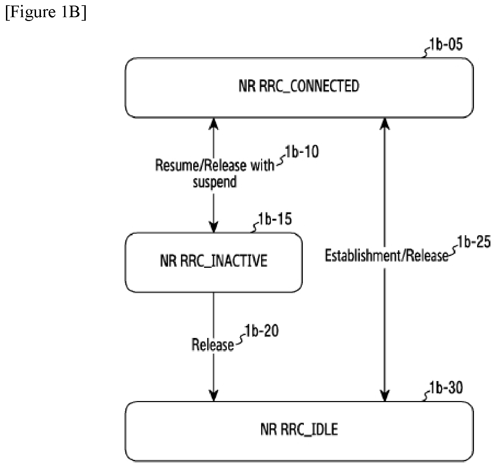

FIG. 1B illustrates radio access state transition in a mobile communication system according to an embodiment of the disclosure.

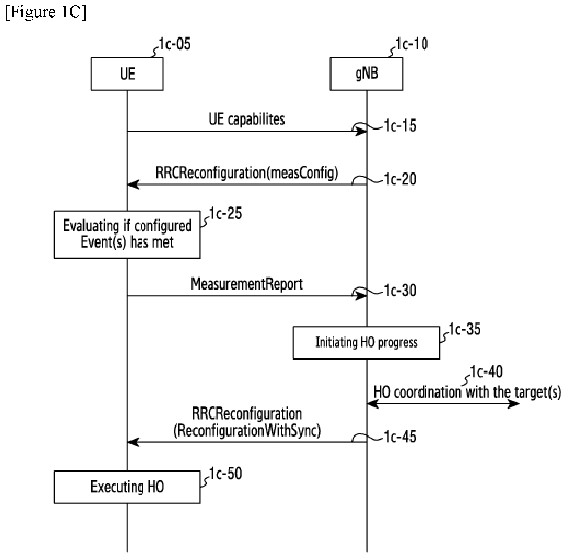

FIG. 1C is a flow diagram illustrating a process in which a UE performs cell measurement and reporting operations according to an embodiment of the disclosure;

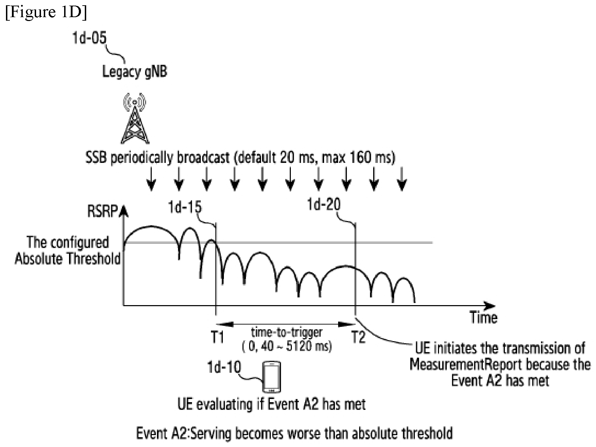

FIG. 1D is a diagram illustrating an operation of reporting a cell measurement result when a specific condition is satisfied according to an embodiment of the disclosure.

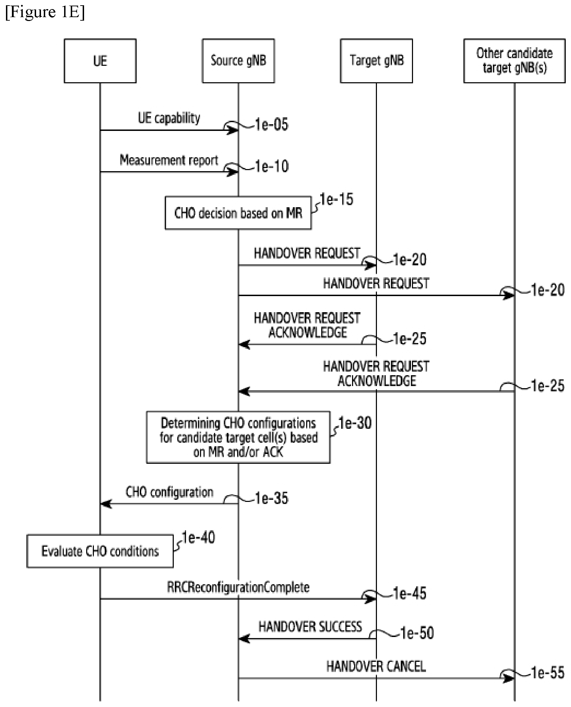

FIG. 1E is a flow diagram illustrating a conditional handover process according to an embodiment of the disclosure.

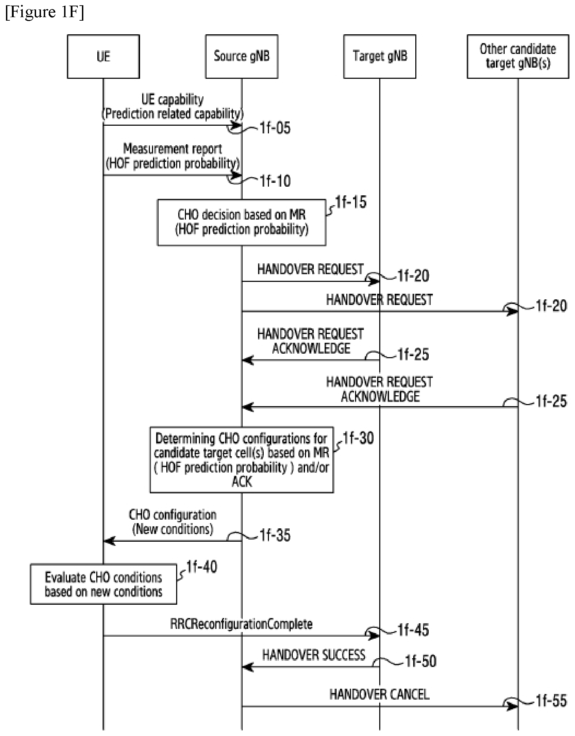

FIG. 1F is a first flow diagram illustrating a conditional handover process based on UE-sided AI/ML prediction according to an embodiment of the disclosure.

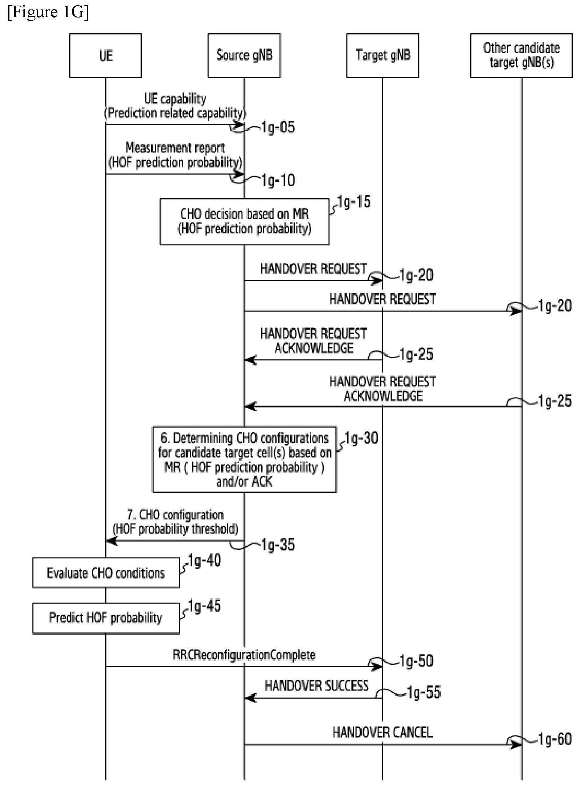

FIG. 1G is a second flow diagram illustrating a conditional handover process based on UE-sided AI/ML prediction according to an embodiment of the disclosure.

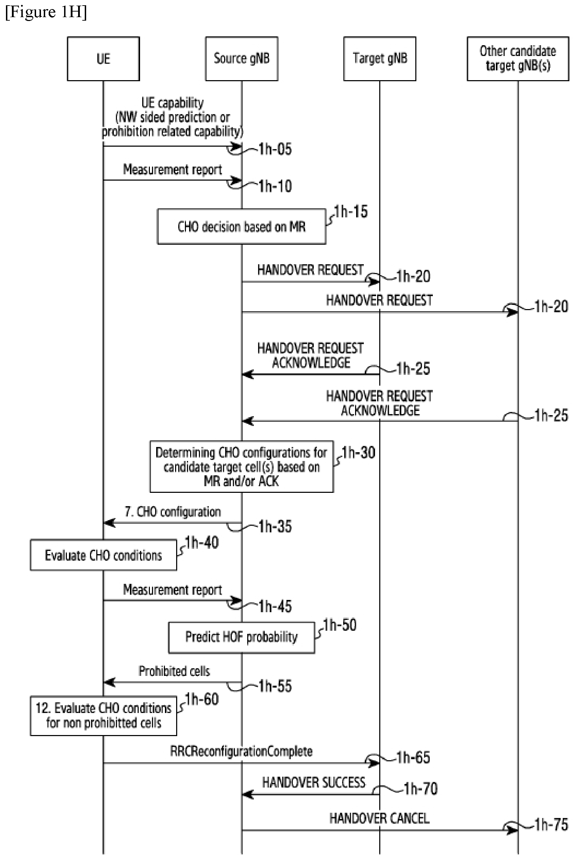

FIG. 1H is a flow diagram illustrating a conditional handover process based on base station-sided or NW-sided AI/ML prediction according to an embodiment of the disclosure.

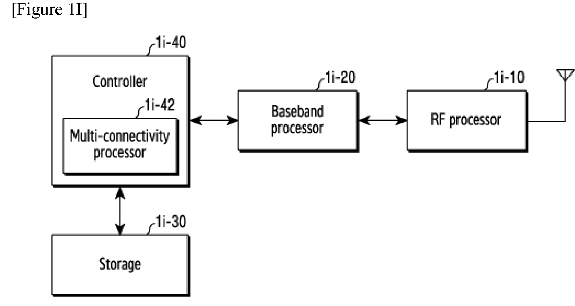

FIG. 1I illustrates a structure of a UE according to an embodiment of the disclosure.

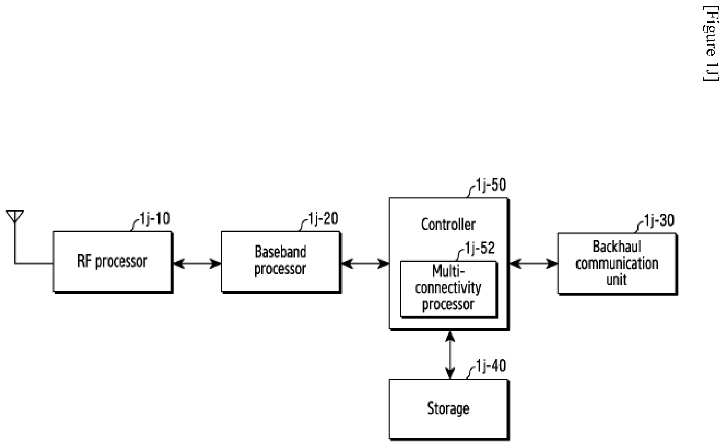

FIG. 1J illustrates a structure of a base station according to an embodiment of the disclosure.

### [Best Mode for Carrying Out the Invention]

A method of a UE in a wireless communication system according to an embodiment of the disclosure includes: receiving, from a source base station, conditional handover configuration information including at least one candidate base station for a conditional handover and a conditional handover execution condition including a measurement-based condition and a prediction-based condition for each candidate base station; determining, as a target base station, a candidate base station that satisfies both the measurement-based condition and the prediction-based condition among the at least one candidate base station; and performing a handover to the target base station.

A method of a source base station in a wireless communication system according to an embodiment of the disclosure includes: receiving a measurement result and a prediction result corresponding to the measurement result from a UE; determining a conditional handover for the UE, based on the measurement result and the prediction result; receiving configuration information for executing a conditional handover from each of at least one candidate base station; generating a conditional handover execution condition including a measurement-based condition and a prediction-based condition for each candidate base station, based on the measurement result, the prediction result, the at least one candidate base station, and the configuration information for executing the conditional handover for each candidate base station; and transmitting conditional handover configuration information including the at least one candidate base station and the conditional handover execution condition for each candidate base station to the UE.

A UE in a wireless communication system according to an embodiment of the disclosure includes a transceiver and a controller connected to the transceiver, wherein the controller is configured to: receive, from a source base station, conditional handover configuration information including at least one candidate base station for a conditional handover and a conditional handover execution condition including a measurement-based condition and a prediction-based condition for each candidate base station; determine, as a target base station, a candidate base station that satisfies both the measurement-based condition and the prediction-based condition among the at least one candidate base station; and perform a handover to the target base station.

A source base station in a wireless communication system according to an embodiment of the disclosure includes a transceiver and a controller connected to the transceiver, wherein the controller is configured to: receive a measurement result and a prediction result corresponding to the measurement result from a UE; determine a conditional handover for the UE, based on the measurement result and the prediction result; receive configuration information for executing a conditional handover from each of at least one candidate base station; generate a conditional handover execution condition including a measurement-based condition and a prediction-based condition for each candidate base station, based on the measurement result, the prediction result, the at least one candidate base station, and the configuration information for executing the conditional handover for each candidate base station; transmit conditional handover configuration information including the at least one candidate base station and the conditional handover execution condition for each candidate base station to the UE.

### [Mode for the Invention]

In describing the embodiments of the present disclosure, descriptions related to technical contents well-known in the art and not associated directly with the disclosure will be omitted. Such an omission of unnecessary descriptions is intended to prevent obscuring of the main idea of the disclosure and more clearly transfer the main idea

For the same reason, in the accompanying drawings, some elements may be exaggerated, omitted, or schematically illustrated. Further, the size of each element does not completely reflect the actual size. In the drawings, identical or corresponding elements are provided with identical reference numerals or different reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the disclosure, the same or like reference numerals designate the same or like elements.

Herein, it will be understood that each block of the flowchart illustrations, and combinations of blocks in the flowchart illustrations, may be performed by computer program instructions. These computer program instructions may be loaded onto a processor of a general purpose computer, special purpose computer, or other programmable data processing apparatus, such that the instructions, which perform through the processor of the computer or other programmable data processing apparatus, create means for performing the functions specified in the flowchart block(s). These computer program instructions may also be stored in a computer usable or computer-readable memory that may direct a computer or other programmable data processing apparatus to function in a particular manner, such that the instructions stored in the computer usable or computer-readable memory produce an article of manufacture including instruction means that perform the function specified in the flowchart block(s). The computer program instructions may also be loaded onto a computer or other programmable data processing apparatus to cause a series of operational steps to be performed on the computer or other programmable data processing apparatus to produce a computer executed process such that the instructions that perform on the computer or other programmable data processing apparatus provide steps for executing the functions specified in the flowchart block(s).

Further, each block may represent a module, segment, or portion of code, which includes one or more executable instructions for executing the specified logical function(s). It should also be noted that in some alternative implementations, the functions noted in the blocks may occur out of the order. For example, two blocks(or functions) shown in succession may in fact be performed substantially concurrently or the blocks may sometimes be performed in the reverse order, depending upon the functionality involved.

As used in the present embodiment, a "~unit" may refer to a software element or a hardware element, such as a field programmable gate array (FPGA) or an application specific integrated circuit (ASIC), which performs a predetermined function. However, the "~unit" is not limited in meaning to software or hardware. The "~unit" may be configured to be in an addressable storage medium or to execute one or more processors. Therefore, the "~unit" includes, for example, software elements, object-oriented software elements, components such as class elements and task elements, processes, functions, properties, procedures, sub-routines, segments of a program code, drivers, firmware, micro-codes, circuits, data, database, data structures, tables, arrays, and parameters. The functionality provided within components and "~units" may be combined into a smaller number of components and "~units," or divided into additional components and "~units." Moreover, the components and "~units" may be implemented to reproduce one or more central processing units (CPUs) within a device or a security multimedia card.

FIG. 1A illustrates a structure of a mobile communication system according to an embodiment of the disclosure.

Referring to FIG. 1A, as illustrated therein, a radio access network of a mobile communication system (new radio, NR) according to an embodiment of the disclosure may include a base station (next generation Node B, hereinafter gNB) 1a-10 and an access and mobility management function (AMF) (or new radio core network) 1a-05. A user equipment (new radio user equipment, hereinafter (NR) UE or terminal) 1a-15 may access an external network via the gNB 1a-10 and the AMF 1a-05. The mobile communication system according to an embodiment of the disclosure may be a next generation wireless mobile communication system, and the gNB may be a next generation base station.

In FIG. 1A, the gNB 1a-10 may correspond to an evolved Node B (eNB) 1a-30 of the conventional LTE system. The gNB is connected to the NR UE 1a-15 through a radio channel 1a-20 and may provide outstanding services as compared to a conventional Node B. In the next generation mobile communication system according to an embodiment of the disclosure, since all user traffic is serviced through a shared channel, a device that collects state information, such as buffer statuses, available transmit power states, and channel states of UEs, and performs scheduling accordingly is required, and the gNB 1a-10 may serve as the device. In general, one gNB may control multiple cells. In order to implement ultrahigh-speed data transmission beyond the conventional LTE, the next generation mobile communication system may provide a wider bandwidth than the existing maximum bandwidth, may employ an orthogonal frequency division multiplexing (hereinafter referred to as OFDM) as a radio access technology, and may additionally integrate a beamforming technology therewith. Furthermore, the next generation mobile communication system may employ an adaptive modulation & coding (hereinafter referred to as AMC) scheme for determining a modulation scheme and a channel coding rate according to a channel state of a UE.

The AMF 1a-05 may perform functions such as mobility support, bearer configuration, and QoS configuration. The AMF 1a-05 is a device responsible for various control functions as well as a mobility management function for a UE, and may be connected to multiple base stations.

In addition, the mobile communication system according to an embodiment of the disclosure may interwork with the conventional LTE system, and the AMF 1a-05 may be connected to a mobility management entity (MME) 1a-25 via a network interface. The MME 1a-25 may be connected to the eNB 1a-30 that is a conventional base station. The NR UE 1a-15 supporting LTE-NR dual connectivity may transmit/receive data while maintaining connections 1a-35 to both the gNB 1a-10 and the eNB 1a-30.

FIG. 1B illustrates radio access state transition in a mobile communication system according to an embodiment of the disclosure.

In the mobile communication system according to embodiments of the disclosure, a UE may have three types of radio resource control (RRC) states or RRC modes. A connected mode (RRC_CONNECTED) 1b-05 is a radio access state in which a UE is capable of transmitting and receiving data. An idle mode (RRC_IDLE) 1b-30 is a radio access state in which the UE monitors whether paging is transmitted to the UE. These two modes (the connected mode and the idle mode) correspond to radio access states that are also applicable to the LTE system, and the technical particulars thereof are the same as those of the LTE system. The mobile communication system according to an embodiment of the disclosure may be a next generation mobile communication system.

In the mobile communication system according to an embodiment of the disclosure, an inactive radio access state (RRC_INACTIVE) 1b-15 may be defined. In the inactive radio access state, UE context may be maintained in the base station and the UE, and radio access network (RAN)-based paging may be supported. The characteristics of the inactive radio access state are enumerated as follows.
- Cell re-selection mobility;
- CN - NR RAN connection (both C/U-planes (control plane/user plane)) has been established for UE;
- The UE AS (Access Stratum) context is stored in at least one gNB and the UE;
- Paging is initiated by NR RAN;
- RAN-based notification area is managed by NR RAN;
- NR RAN knows the RAN-based notification area which the UE belongs to;

A UE in the inactive radio access state according to an embodiment of the disclosure may transition to the connected mode or the idle mode by using a specific procedure. The transition between the connected mode and the idle mode (1b-10) may be performed via a "resume" or "release with suspend" procedure. For example, the UE may transition from the inactive mode to the connected mode according to the resume, procedure and may transition from the connected mode to the inactive mode by receiving a release message including suspend configuration information (1b-10). This procedure is performed via transmission and reception of one or more RRC messages between the UE and the base station, and may include one or more operations. In addition, the UE may transition from the inactive mode to the idle mode via a "release after resume" procedure (1b-20). The transition between the connected mode and the idle mode (1b-25) may follow the conventional LTE technology. For example, the transition between the above modes may be achieved via an establishment or release procedure.

FIG. 1C is a flowchart illustrating a process in which a UE performs cell measurement and reporting operations according to an embodiment of the disclosure;

According to an embodiment of the disclosure, in operation 1c-15, a UE 1c-05 may report its capability information to a base station (gNB) 1c-10. In operation 1c-20, the gNB 1c-10 may transmit an RRCReconfiguration message including configuration information (measConfig IE) related to a cell measurement operation to the UE 1c-05.

The configuration information (measConfig IE) may include information required for the UE 1c-05 to report measurement results to the gNB 1c-10 according to measurement report types (e.g., periodical, event-triggered, and event-triggered periodical). For example, for "event-triggered" or "event-triggered periodical", when a specific event configured based on the configuration information (measConfig IE) is satisfied, the UE 1c-05 may report a predetermined measurement result. For example, the following events may be configured in the NR system.
- Intra-/inter-RAT measurement-related event(s) are as given in Table 1 below.

**[Table 1]**

| |
|---|
| - Event A1: Serving becomes better than absolute threshold; |
| - Event A2: Serving becomes worse than absolute threshold; |
| - Event A3: Neighbour becomes amount of offset better than PCell/PSCell; |
| - Event A4: Neighbour becomes better than absolute threshold; |
| - Event A5: PCell/PSCell becomes worse than absolute threshold1 AND Neighbour/SCell becomes better than another absolute threshold2; |
| - Event A6: Neighbour becomes amount of offset better than SCell; |
| - Event D1: Distance between UE and a reference location referenceLocation1 becomes larger than configured threshold distanceThreshFromReference1 and distance between UE and a reference location referenceLocation2 becomes shorter than configured threshold distanceThreshFromReference2; |
| - Event B1: Neighbour becomes better than absolute threshold; |
| - Event B2: PCell becomes worse than absolute threshold1 AND Neighbour becomes better than another absolute threshold2; |

- Similar to conditional measurement reporting, when a specific event is satisfied in a conditional handover, the UE 1c-05 may also perform a handover according to conditional handover configuration information. Event(s) related to the conditional handover are as given in Table 2 below.

**[Table 2]**

| |
|---|
| - CondEvent A3: Conditional reconfiguration candidate becomes amount of offset better than PCell/PSCell; |
| - CondEvent A4: Conditional reconfiguration candidate becomes better than absolute threshold; |
| - CondEvent A5: PCell/PSCell becomes worse than absolute threshold1 AND Conditional reconfiguration candidate becomes better than another absolute threshold2; |
| - CondEvent D1: Distance between UE and a reference location referenceLocation1 becomes larger than configured threshold distanceThreshFromReference1 and distance between UE and a reference location referenceLocation2 of conditional reconfiguration candidate becomes shorter than configured threshold distanceThreshFromReference2; |
| - CondEvent T1: Time measured at UE becomes more than configured threshold t1-Threshold but is less than t1-Threshold + duration; |

- When a specific event is satisfied in a (sidelink) relay, the UE 1c-05 may perform a predetermined operation. Relay-related event(s) are as given in Table 3 below.

**[Table 3]**

| |
|---|
| - Event X1: Serving L2 U2N Relay UE becomes worse than absolute threshold1 AND NR Cell becomes better than another absolute threshold2; |
| - Event X2: Serving L2 U2N Relay UE becomes worse than absolute threshold; |
| - Event Y1: PCell becomes worse than absolute threshold1 AND candidate L2 U2N Relay UE becomes better than another absolute threshold2; |
| - Event Y2: Candidate L2 U2N Relay UE becomes better than absolute threshold; |

- For NR-unlicensed (NR-U), when a specific event is satisfied, the UE 1c-05 may perform a predetermined operation. NR-U-related event(s) are as given in Table 4 below.

**[Table 4]**

| |
|---|
| - Event I1: Interference becomes higher than absolute threshold. |

In operation 1c-25, the UE 1c-05 may evaluate whether the configured events are satisfied. For example, if the events described above continuously satisfy the predetermined conditions for a predetermined time period (time-to-trigger), the UE 1c-05 may consider that the events are satisfied.

In operation 1c-30, the UE 1c-05 may report a MeasurementReport message including a measurement result to the gNB 1c-10 when the configured condition is satisfied. Alternatively, the UE 1c-05 may perform a predetermined operation corresponding to the condition, for example, a conditional handover.

Upon receiving the measurement result from the UE 1c-05, the gNB 1c-10 may use the measurement result for a predetermined purpose. For example, in operation 1c-35, the gNB 1c-10 may determine whether to trigger a handover of the UE 1c-05. In operation 1c-40, if triggering a handover, the gNB 1c-10 may request a handover from target cell(s). In operation 1c-45, the gNB 1c-10 may transmit, to the UE 1c-05, handover configuration information configured based on predetermined configuration information received from the target cell(s). In operation 1c-50, upon receiving the handover configuration information, the UE 1c-05 may perform a handover.

FIG. 1D is a diagram illustrating an operation of reporting a cell measurement result when a specific condition is satisfied according to an embodiment of the disclosure.

Referring to FIG. 1D, a UE 1d-10 may evaluate signal strength or signal quality of the base station 1d-05, based on a synchronization signal block (SSB) (or an SS/PBCH block) or a channel state information reference signal (CSI-RS) transmitted from the base station 1d-05. Hereinafter, for convenience of description, a cell measurement result reporting operation of the UE 1d-10 will be described based on an SSB, but the same may apply to a CSI-RS.

In a case of an SSB, an SSB transmission period may be determined according to a configuration of the base station 1d-05. Generally, the SSB transmission period may be configured to be 20ms, and the base station 1d-05 may transmit an SSB with a maximum period of 160ms.

When the base station 1d-05 configures event A2 for the UE 1d-10, the UE 1d-10 may evaluate whether a reference signal received power (RSRP) value continuously measured by the UE 1d-10 based on an SSB is lower than a configured absolute threshold value for a predetermined time interval (time-to-trigger (TTT)), starting from a time point 1d-15 when the RSRP value measured based on the SSB becomes lower than the configured absolute threshold value.

When an RSRP value measured from the initial time point 1d-15 when the RSRP value measured based on the SSB becomes lower than the configured absolute threshold value to a time point 1d-20 when the predetermined time interval (time-to-trigger, TTT) expires is continuously lower than the threshold value, the UE 1d-10 may determine that event A2 is satisfied, and may report a measurement report triggered by Event A2 to the base station 1d-05. As described above, the TTT may be considered in determining whether a condition for measurement reporting is satisfied, thereby mitigating variability of measurement signals. A TTT value may be configured by the base station 1d-05 for each event.

When the foregoing events continuously satisfy a predetermined condition for a predetermined time interval (TTT), the UE 1d-10 may perform an operation corresponding to a purpose of a configured event according to the purpose of the event. When a type of measurement reporting according to measurement-related configuration information received by the UE 1d-10 is configured to "periodical" or "event-triggered periodical," the UE 1d-10 may periodically perform measurement reporting.

According to an existing Layer 3 (L3) handover mechanism, a handover may be triggered and executed by a network or a base station, based on historical cell measurement results previously reported and/or a cell measurement event(s). That is, this mechanism may be understood as a reactive scheme.

A reactive handover scheme may be efficient for existing services when a UE moves between macro cells or when a UE has low mobility. However, when a UE has high mobility, when a UE moves between high-density micro cells, or for future services, such as XR, the reactive handover scheme may cause problems. For example, an unintended situation, such as handover failure, radio link failure, a ping-pong phenomenon, throughput loss, or a handover occurring too early or too late, may arise. Accordingly, a conditional handover has been introduced in Rel-16 to enhance handover robustness, and a lower-layer triggered mobility (LTM) handover has been introduced in Rel-18 to reduce service interruption time caused by frequent handovers between small cells. However, since these two handover mechanisms (conditional handover and LTM) may be still based on a reactive scheme, the mechanisms may not be sufficient.

A handover mechanism based on an artificial intelligence (AI)/machine learning (ML) algorithm may enable a proactive scheme. For example, a UE may generate predicted cell measurement information for the future through an AI/ML model, and may report the predicted cell measurement information for the future generated through the AI/ML model to a base station (or network). Accordingly, the base station may prepare a handover in advance to prevent a delay, and may proactively indicate a handover to the UE, thus handing over the UE to another base station or cell before a problem (e.g., radio link failure (RLF)) occurs in the UE. Further, by receiving the predicted cell measurement information for the future of the UE, the base station may improve a handover and/or radio resource management (RRM) performance as compared to a reactive scheme. For example, the base station may make a better network operation/configuration decision or take a proactive measure to avoid an unintended event. Alternatively, the base station or network may generate predictive information by running an AI/ML model using report information received from the UE, and may instruct the UE to perform a proactive handover, based on the generated predictive information.

An AI/ML prediction result of the UE or the base station may be utilized not only for a conventional handover but also for a conditional handover (CHO), a conditional PSCell addition or change (CPAC), a conditional PSCell addition (CPA), or a conditional PSCell change (CPC). For convenience of description, an embodiment limited to a CHO may be illustrated in the disclosure, but the disclosure may be equally applied to/used for a CPAC, a CPA, and a CPC in consideration of a SCell or PSCell.

FIG. 1E is a flowchart illustrating a conditional handover process according to an embodiment of the disclosure.

In operation 1e-05, a connected-mode UE may transmit a capability of the UE related to UE measurement and/or a conditional handover (or CHO) to a base station through a UE capability information message. The UE capability information message may be a message transmitted by the UE to the base station in response to a UE capability enquiry message previously received from the base station.

In operation 1e-10, the UE may receive a UE measurement-related configuration from the base station (e.g., via an RRCReconfiguration message), and may report a result of measurement according to the measurement configuration to the base station (e.g., the result measured by the UE may be reported to the base station via a MeasurementReport message).

In operation 1e-15, the base station may determine to use a CHO (e.g., whether to use the CHO may be determined based on the measurement result received by the base station from the UE).

In operation 1e-20, the base station (source base station) may request a CHO for one or a plurality of candidate cells from a candidate target base station(s) (e.g., the CHO request of the base station for one or a plurality of candidate cells may be performed through a HANDOVER REQUEST message). The source base station may transmit a CHO request message (e.g., a HANDOVER REQUEST message) for each cell.

In operation 1e-25, the candidate base station(s) may provide a CHO response message (e.g., the CHO response message of the candidate base station(s) may be a HANDOVER RESPONSE ACKNOWLEDGE message) to the source base station. The CHO response message may include configuration information about a CHO candidate cell(s) and/or a CHO execution condition(s).

In operation 1e-30, the source base station may generate/determine CHO configuration information to be transmitted to the UE, based on the configuration information about the CHO candidate cell(s) and/or the CHO execution condition(s) and/or the measurement result report received from the UE.

In operation 1e-35, the source base station may transmit the CHO configuration information generated/determined in operation 1e-30 to the UE through an RRC reconfiguration message. The CHO configuration information may include the configuration information about the CHO candidate cell(s) and/or the CHO execution condition(s). Upon receiving the CHO configuration information, the UE may store the same.

In operation 1e-40, the UE may evaluate whether the CHO execution condition for the candidate cell(s) is satisfied.

In operation 1e-45, when the UE determines that the CHO execution condition is satisfied for at least one candidate cell (for time indicated by a TTT value), the UE may release a connection with the source cell to perform a handover to the cell (target cell) for which the CHO execution condition is satisfied. The UE may apply/use the stored configuration information about the cell. Further, after synchronizing with the target cell, the UE may transmit an RRC reconfiguration complete message to the target cell or a target base station. After the successful handover, the UE may release the stored CHO configuration information.

In operation 1e-50, the target base station may transmit a HANDOVER SUCCESS message to the source base station, and the HANDOVER SUCCESS message may indicate that the UE has successfully performed the handover to the target base station or target cell.

In operation 1e-55, the source base station may transmit a HANDOVER CANCEL message to a candidate target cell or base station other than the target cell, and the HANDOVER CANCEL message may be for the other candidate target cell or base station to cancel the CHO for the UE.

FIG. 1F is a first flowchart illustrating a conditional handover process based on UE-sided AI/ML prediction according to an embodiment of the disclosure.

In operation 1f-05, a connected-mode UE may transmit a capability of the UE related to UE measurement and/or a conditional handover (or CHO) to a base station through a UE capability information message. The UE capability information message may be a message transmitted by the UE to the base station in response to a UE capability enquiry message previously received from the base station. The UE may indicate whether the UE supports at least one of the following capabilities to the base station through the UE capability information message.
- Capability 1: Capability to support at least one of ((UE-sided) AI/ML-based) cell measurement value (RSRP/RSRQ/SINR) information prediction, handover failure (HOF) information prediction, radio link failure (RLF) information prediction, or time-of-stay (TOS) information prediction
- Capability 2: Capability to support a CHO using at least one of ((UE-sided) AI/ML-based) cell measurement value (RSRP/RSRQ/SINR) information prediction, handover failure (HOF) information prediction, radio link failure (RLF) information prediction, or time-of-stay (TOS) information prediction
- Capability 3: Capability to support a CHO execution condition using at least one of ((UE-sided) AI/ML-based) cell measurement value (RSRP/RSRQ/SINR) information prediction, handover failure (HOF) information prediction, radio link failure (RLF) information prediction, or time-of-stay (TOS) information prediction

The UE may indicate to the base station that the UE supports (at least one of) the above capabilities by including a specific indicator or configuring a specific value (e.g., true) in the UE capability information message. The UE may indicate to the base station that the UE does not support (at least one of) the above capabilities by omitting a specific indicator or configuring a specific value (e.g., false) in the UE capability information message.

In operation 1f-10, the UE may receive a UE measurement-related configuration from the base station (e.g., the UE may receive the UE measurement-related configuration from the base station through an RRCReconfiguration message), and may report a result of measurement according to the measurement configuration to the base station (e.g., the UE may transmit the measured result to the base station through a MeasurementReport message). The UE may report at least one of a cell measurement value (RSRP/RSRQ/SINR), a predicted value related to HOF, RLF, or TOS (e.g., for each cell) (e.g., a predicted RSRP/RSRQ/SINR value, an HOF probability, an RLF probability, and a TOS value) to the base station. To this end, the base station may configure configuration information about at least one of HOF, RLF, or TOS prediction for the UE in advance (e.g., when transmitting the measurement-related configuration).

According to an embodiment of the disclosure, the configuration information may include a configuration regarding a measurement report triggering condition.

The measurement report triggering condition may be at least one of the following conditions.
- Condition 1: If a predicted measurement value for a serving cell or SpCell (or the value plus an offset for the serving cell or SpCell) (e.g., RSRP, RSRQ, or SINR) is less than a specific threshold value (even after adding a specific hysteresis value)
- Condition 2: If the predicted measurement value for the serving cell or SpCell (or the value plus the offset for the serving cell or SpCell) (e.g., RSRP, RSRQ, or SINR) is greater than the specific threshold value (even after subtracting the specific hysteresis value)
- Condition 3: If a predicted measurement value for a neighbor cell (or candidate cell) (or the value plus an offset for the neighbor cell (or candidate cell)) (e.g., RSRP, RSRQ, or SINR) is greater than the predicted measurement value for the serving cell or SpCell (or the value plus the offset for the serving cell or SpCell) (by a specific offset or greater) (even after subtracting the specific hysteresis value)
- Condition 4: If the predicted measurement value for the neighbor cell (or candidate cell) (or the value plus the offset for the neighbor cell (or candidate cell)) (e.g., RSRP, RSRQ, or SINR) is less than the predicted measurement value for the serving cell or SpCell (or the value plus the offset for the serving cell or SpCell) (by the specific offset or greater) (even after adding the specific hysteresis value)
- Condition 5: If the predicted measurement value for the neighbor cell (or candidate cell) (or the value plus the offset for the neighbor cell (or candidate cell)) (e.g., RSRP, RSRQ, or SINR) is greater than the specific threshold value (even after subtracting the specific hysteresis value)
- Condition 6: If the predicted measurement value for the neighbor cell (or candidate cell) (or the value plus the offset for the neighbor cell (or candidate cell)) (e.g., RSRP, RSRQ, or SINR) is less than the specific threshold value (even after adding the specific hysteresis value)
- Condition 7: If a predicted HOF probability for the neighbor cell (or candidate cell) (or the value plus an offset for the neighbor cell (or candidate cell)) is less than a specific threshold value (even after adding a specific hysteresis value)
- Condition 8: If the predicted HOF probability for the neighbor cell (or candidate cell) (or the value plus the offset for the neighbor cell (or candidate cell)) is greater than the specific threshold value (even after subtracting the specific hysteresis value)
- Condition 9: If a predicted RLF probability for the neighbor cell (or candidate cell) (upon subsequent connection with the neighbor cell (or candidate cell)) (or the value plus an offset for the candidate cell) is less than a specific threshold value (even after adding a specific hysteresis value)
- Condition 10: If the predicted RLF probability for the neighbor cell (or candidate cell) (upon subsequent connection with the neighbor cell (or candidate cell)) (or the value plus the offset for the candidate cell) is greater than the specific threshold value (even after subtracting the specific hysteresis value)
- Condition 11: If an expected/predicted TOS for the neighbor cell (or candidate cell) (upon subsequent connection with the candidate)) (or the value plus an offset for the neighbor cell (or candidate cell)) is greater than a specific threshold value (even after subtracting a specific hysteresis value)
- Condition 12: If the expected/predicted TOS for the neighbor cell (or candidate cell) (upon subsequent connection with the candidate cell)) (or the value plus the offset for the neighbor cell (or candidate cell)) is less than the specific threshold value (even after adding the specific hysteresis value)
- Condition 13: If the predicted HOF probability for the neighbor cell (or candidate cell) (or the value plus the offset for the neighbor cell (or candidate cell)) is less than a predicted RLF probability for the serving cell or SpCell (upon subsequent connection with the serving cell or SpCell) (or the value plus an offset for the serving cell or SpCell) (by a specific offset or greater) (even after adding the specific hysteresis value)
- Condition 14: If the predicted HOF probability for the neighbor cell (or candidate cell) (or the value plus the offset for the neighbor cell (or candidate cell)) is greater than the predicted RLF probability for the serving cell or SpCell (upon subsequent connection with the serving cell or SpCell) (or the value plus the offset for the serving cell or SpCell) (by the specific offset or greater) (even after subtracting the specific hysteresis value)
- Condition 15: If a predicted HOF probability for the serving cell or SpCell (or the value plus an offset for the serving cell or SpCell) is greater than the specific threshold value (even after subtracting the specific hysteresis value)
- Condition 16: If the predicted HOF probability for the serving cell or SpCell (or the value plus the offset for the serving cell or SpCell) is less than the specific threshold value (even after adding the specific hysteresis value)
- Condition 17: If the predicted RLF probability for the serving cell or SpCell (upon subsequent connection with the serving cell or SpCell) (or the value plus the offset for the serving cell or SpCell) is greater than the specific threshold value (even after subtracting the specific hysteresis value)
- Condition 18: If the predicted RLF probability for the serving cell or SpCell (upon subsequent connection with the serving cell or SpCell) (or the value plus the offset for the serving cell or SpCell) is less than the specific threshold value (even after adding the specific hysteresis value)
- Condition 19: If an expected/predicted TOS for the serving cell or SpCell (upon subsequent connection with the serving cell or SpCell)) (or the value plus an offset for the serving cell or SpCell) is less than the specific threshold value (even after adding the specific hysteresis value)
- Condition 20: If the expected/predicted TOS for the serving cell or SpCell (upon subsequent connection with the serving cell or SpCell)) (or the value plus the offset for the serving cell or SpCell) is greater than the specific threshold value (even after subtracting the specific hysteresis value)
- Condition 21: A combination of a plurality of (at least two) conditions among conditions 1 to 20. When all of the plurality of configured conditions are satisfied, the UE may determine that condition 21 is satisfied. When at least one of the plurality of configured conditions is not satisfied, the UE may determine that condition 21 is not satisfied.
- Condition 22: A combination of at least one of (prediction-based) condition 1 to condition 21 and at least one of (actual measurement-based) conditions (e.g., Event A3 and CondEvent A3). When both conditions (at least one prediction-based condition and at least one actual measurement-based condition) are satisfied, the UE may determine that condition 22 is satisfied. When at least one of the two conditions is not satisfied, the UE may determine that condition 22 is not satisfied.

The aforementioned threshold values, hysteresis values, and offset values may be different values from each other, and may each be a fixed value defined in a standard or a value variably configured by a network.

The aforementioned conditions may be event entering conditions, and corresponding leaving (opposite of entering) conditions may be defined conversely. For example, a leaving condition corresponding to condition 1 may be defined such that the predicted measurement value for the serving cell or SpCell (or the value plus the offset for the serving cell or SpCell) (e.g., RSRP, RSRQ, or SINR) is greater than specific threshold value (even after subtracting the specific hysteresis value). Leaving conditions may also be defined for the other conditions in the same manner.

The configuration information about the measurement report triggering condition included in the measurement configuration transmitted by the base station to the UE in operation 1f-10 may include the threshold values, the hysteresis values, an indicator indicating whether to report upon satisfying a leaving condition (e.g., reportOnLeave), a time-to-trigger (TTT) value, and/or the offset values.

In operation 1f-10, the UE may evaluate whether the measurement report triggering condition is satisfied.

In operation 1f-10, when the (entering) condition is satisfied for at least one cell (for time indicated by the TTT value), the UE may transmit a measurement report to the base station.

According to an embodiment of the disclosure, in a case where the UE is configured with the indicator indicating whether to report upon satisfying the leaving condition (e.g., reportOnLeave), when the leaving condition is satisfied for at least one cell (for the time indicated by the TTT value), the UE may report to the base station that the leaving condition is satisfied in the specific cell and/or related information (e.g., an actual cell measurement value, a predicted cell measurement value, or a predicted HOF probability/RLF probability/TOS value).

In operation 1f-15, the base station may determine to use a CHO (e.g., the base station may determine whether to use the CHO, based on the measurement result and a prediction result received from the UE).

In operation 1f-20, the base station (source base station) may request a CHO for one or a plurality of candidate cells from a candidate target base station(s) (e.g., the CHO request for one or a plurality of candidate cells may be performed through a HANDOVER REQUEST message). The source base station may transmit a CHO request message (e.g., a HANDOVER REQUEST message) for each cell.

In operation 1f-25, the candidate base station(s) may provide a CHO response message (e.g., the CHO response message may be a HANDOVER RESPONSE ACKNOWLEDGE message) to the source base station. The CHO response message may include configuration information about a CHO candidate cell(s) and/or a CHO execution condition(s).

In operation 1f-30, the source base station may generate/determine CHO configuration information to be transmitted to the UE, based on at least one of the configuration information about the CHO candidate cell(s) or the CHO execution condition(s), or the measurement/prediction result report received from the UE.

In operation 1f-35, the source base station may transmit the CHO configuration information generated/determined in operation 1f-30 to the UE through an RRC reconfiguration message. The CHO configuration information may include the configuration information about the CHO candidate cell(s) and/or the CHO execution condition(s). Upon receiving the CHO configuration information, the UE may store the same. The execution condition may be at least one of the following conditions.
- Condition 1: If the predicted measurement value for the serving cell or SpCell (or the value plus the offset for the serving cell or SpCell) (e.g., RSRP, RSRQ, or SINR) is less than the specific threshold value (even after adding the specific hysteresis value)
- Condition 2: If the predicted measurement value for the candidate cell (or the value plus the offset for the candidate cell) (e.g., RSRP, RSRQ, or SINR) is greater than the predicted measurement value for the serving cell or SpCell (or the value plus the offset for the serving cell or SpCell) (by the specific offset or greater) (even after subtracting the specific hysteresis value)
- Condition 3: If the predicted measurement value for the candidate cell (or the value plus the offset for the candidate cell) (e.g., RSRP, RSRQ, or SINR) is greater than the specific threshold value (even after subtracting the specific hysteresis value)
- Condition 4: A combination of condition 1 and condition 3. When both conditions are satisfied, the UE may determine that condition 4 is satisfied. When at least one of the two conditions is not satisfied, the UE may determine that condition 4 is not satisfied.
- Condition 5: If the predicted HOF probability for the candidate cell (or the value plus an offset for the candidate cell) is less than the specific threshold value (even after adding the specific hysteresis value)
- Condition 6: If the predicted RLF probability for the candidate cell (upon subsequent connection with the candidate cell) (or the value plus the offset for the candidate cell) is less than the specific threshold value (even after adding the specific hysteresis value)
- Condition 7: If the expected/predicted TOS for the candidate cell (upon subsequent connection with the candidate cell) (or the value plus the offset for the candidate cell) is greater than the specific threshold value (even after subtracting the specific hysteresis value)
- Condition 8: If the predicted HOF probability for the candidate cell (or the value plus the offset for the candidate cell) is less than the predicted RLF probability for the serving cell or SpCell (upon subsequent connection with the serving cell or SpCell) (or the value plus the offset for the serving cell or SpCell) (by the specific offset or greater) (even after adding the specific hysteresis value)
- Condition 9: If the predicted HOF probability for the serving cell or SpCell (or the value plus the offset for the serving cell or SpCell) is greater than the specific threshold value (even after subtracting the specific hysteresis value)
- Condition 10: If the predicted RLF probability for the serving cell or SpCell (upon subsequent connection with the serving cell or SpCell) (or the value plus the offset for the serving cell or SpCell) is greater than the specific threshold value (even after subtracting the specific hysteresis value)
- Condition 11: If the expected/predicted TOS for the serving cell or SpCell (upon subsequent connection with the serving cell or SpCell)) (or the value plus the offset for the serving cell or SpCell) is less than the specific threshold value (even after adding the specific hysteresis value)
- Condition 12: If it is predicted that a HOF will not occur for the candidate cell
- Condition 13: If it is predicted that a RLF will not occur for the candidate cell (upon subsequent connection with the candidate cell)
- Condition 14: If it is predicted that a handover ping-pong phenomenon will not occur for the candidate cell (upon subsequent connection with the candidate cell)
- Condition 15: If it is predicted that a HOF will occur for the serving cell or SpCell
- Condition 16: If it is predicted that a RLF will occur for the serving cell or SpCell (upon subsequent connection with the serving cell or SpCell)
- Condition 17: If it is predicted that a handover ping-pong phenomenon will occur for the serving cell or SpCell (upon subsequent connection with the serving cell or SpCell)
- Condition 18: A combination of a plurality of (at least two) conditions among conditions 1 to 17. When all of the plurality of configured conditions are satisfied, the UE may determine that condition 18 is satisfied. When at least one of the plurality of configured conditions is not satisfied, the UE may determine that condition 18 is not satisfied.
- Condition 19: A combination of at least one (prediction-based) new condition of condition 1 to condition 18 and at least one of (actual measurement-based) conditions (e.g., Event A3 and CondEvent A3). When both conditions are satisfied, the UE may determine that condition 19 is satisfied. When at least one of the two conditions is not satisfied, the UE may determine that condition 19 is not satisfied.

The aforementioned threshold values, hysteresis values, and offset values may be different values from each other, and may each be a fixed value defined in a standard or a value variably configured by the network.

The aforementioned conditions may be event entering conditions, and corresponding leaving (opposite of entering) conditions may be defined conversely. For example, a leaving condition corresponding to condition 1 may be defined such that the predicted measurement value for the serving cell or SpCell (or the value plus the offset for the serving cell or SpCell) (e.g., RSRP, RSRQ, or SINR) is greater than specific threshold value (even after subtracting the specific hysteresis value). Leaving conditions may also be defined for the other conditions in the same manner.

The configuration information about the CHO execution condition included in the CHO configuration transmitted by the base station to the UE in operation 1f-35 may include at least one of the threshold values, the hysteresis values, an indicator indicating whether to report upon satisfying a leaving condition (e.g., reportOnLeave), a time-to-trigger (TTT) value, or the offset values.

In operation 1f-40, the UE may evaluate whether the CHO execution condition for the candidate cell(s) is satisfied.

In operation 1f-45, when the CHO execution (entering) condition is satisfied for at least one candidate cell (for time indicated by a TTT value), the UE may release a connection with the source cell to perform a handover to the cell (target cell) for which the CHO execution (entering) condition is satisfied. The UE may apply/use the stored configuration information about the cell. Further, after synchronizing with the target cell, the UE may transmit an RRC reconfiguration complete message to the target cell or a target base station. After the successful handover, the UE may release the stored CHO configuration information.

According to an embodiment of the disclosure, in a case where the UE is configured with the indicator indicating whether to report upon satisfying the leaving condition (e.g., reportOnLeave), when the CHO execution leaving condition is satisfied for at least one candidate cell (for the time indicated by the TTT value), the UE may report to the base station that the leaving condition is satisfied in the specific cell and/or related information (e.g., an actual cell measurement value, a predicted cell measurement value, or a predicted HOF probability/RLF probability/TOS value).

In operation 1f-50, the target base station may transmit a HANDOVER SUCCESS message to the source base station, and the HANDOVER SUCCESS message may indicate that the UE has successfully performed the handover to the target base station or target cell.

In operation 1f-55, the source base station may transmit a HANDOVER CANCEL message to a candidate target cell or base station other than the target cell, and the HANDOVER CANCEL message may be for the other candidate target cell or base station to cancel the CHO for the UE.

FIG. 1G is a second flowchart illustrating a conditional handover process based on UE-sided AI/ML prediction according to an embodiment of the disclosure.

Operation 1g-05 may be the same as at least one of operation 1e-05 or operation 1f-05, and the aforementioned description for at least one of operation 1e-05 or operation 1f-05 may be applied for a detailed operation of operation 1g-05. According to an embodiment of the disclosure, a UE may indicate to a base station whether the UE supports the following capability through a UE capability information message.
- Capability 1: Capability to support selection/determination of a candidate target cell in a CHO using a threshold related to at least one of a ((UE-sided) AI/ML-based) cell measurement value (RSRP/RSRQ/SINR), handover failure (HOF), radio link failure (RLF), or time of stay (TOS)

Operation 1g-10 may be the same as at least one of operation 1e-10 or operation 1f-10, and the aforementioned description for at least one of operation 1e-10 or operation 1f-10 may be applied for a detailed operation of operation 1g-10.

Operation 1g-15 may be the same as at least one of operation 1e-15 or operation 1f-15, and the aforementioned description for at least one of operation 1e-15 or operation 1f-15 may be applied for a detailed operation of operation 1g-15.

Operation 1g-20 may be the same as at least one of operation 1e-20 or operation 1f-20, and the aforementioned description for at least one of operation 1e-20 or operation 1f-20 may be applied for a detailed operation of operation 1g-20.

Operation 1g-25 may be the same as at least one of operation 1e-25 or operation 1f-25, and the aforementioned description for at least one of operation 1e-25 or operation 1f-25 may be applied for a detailed operation of operation 1g-25.

Operation 1g-30 may be the same as at least one of operation 1e-30 or operation 1f-30, and the aforementioned description for at least one of operation 1e-30 or operation 1f-30 may be applied for a detailed operation of operation 1g-30.

Operation 1g-35 may be the same as at least one of operation 1e-35 or operation 1f-35, and the aforementioned description for at least one of operation 1e-35 or operation 1f-35 may be applied for a detailed operation of operation 1g-35. According to an embodiment of the disclosure, in operation 1g-35, the base station may transmit, to the UE, a CHO configuration including a prediction-related threshold value (threshold value A) (e.g., at least one of a threshold value for HOF probability, a threshold value for RLF probability, or a threshold value for TOS).

Operation 1g-40 may be the same as at least one of operation 1e-40 or operation 1f-40, and the aforementioned description for at least one of operation 1e-40 or operation 1f-40 may be applied for a detailed operation of operation 1g-40. The UE may obtain a cell (e.g., a CHO-triggered cell) for which at least one CHO execution condition is satisfied.

In operation 1g-45, the UE may calculate an AI/ML predicted value (e.g., a HOF probability, a RLF probability, and/or TOS) for the candidate cell(s) for which the CHO execution condition is satisfied. When the predicted value (e.g., the HOF probability, the RLF probability, and/or the TOS) for the candidate cell is worse than threshold value A configured in 1g-35 (e.g., when the predicted HOF probability for the candidate cell is greater than the threshold value for HOF probability configured as threshold value A) (e.g., when the predicted RLF probability for the candidate cell is greater than the threshold value for RLF probability configured as threshold value A or when the predicted TOS for the candidate cell is less than the threshold value for TOS configured as threshold value A), the UE may consider the candidate cell as no longer being a CHO-triggered cell, and may consider the candidate cell as a cell for which CHO execution is prohibited (e.g., a CHO-prohibited cell).

Operation 1g-50 may be the same as at least one of operation 1e-45 or operation 1f-45, and the aforementioned description for at least one of operation 1e-45 or operation 1f-45 may be applied for a detailed operation of operation 1g-50. According to an embodiment of the disclosure, the UE may select one cell from among the CHO-triggered cells and/or candidate cells that are not CHO-prohibited cells, and may perform a handover.

Operation 1g-55 may be the same as at least one of operation 1e-50 or operation 1f-50, and the aforementioned description for at least one of operation 1e-50 or operation 1f-50 may be applied for a detailed operation of operation 1g-55.

Operation 1g-60 may be the same as at least one of operation 1e-55 or operation 1f-55, and the aforementioned description for at least one of operation 1e-55 or operation 1f-55 may be applied for a detailed operation of operation 1g-60.

FIG. 1H is a flowchart illustrating a conditional handover process based on base station-sided or NW-sided AI/ML prediction according to an embodiment of the disclosure.

Operation 1h-05 may be the same as at least one of operation 1e-05 or operation 1f-05, and the aforementioned description for at least one of operation 1e-05 or operation 1f-05 may be applied for a detailed operation of operation 1h-05. According to an embodiment of the disclosure, a UE may indicate to a base station whether the UE supports the following capabilities through a UE capability information message.
- Capability 1: Capability to support at least one of ((NW-sided) AI/ML-based) cell measurement value (RSRP/RSRQ/SINR) information prediction, handover failure (HOF) information prediction, radio link failure (RLF) information prediction, or time-of-stay (TOS) information prediction
- Capability 2: Capability to support a CHO using at least one of ((NW-sided) AI/ML-based) cell measurement value (RSRP/RSRQ/SINR) information prediction, handover failure (HOF) information prediction, radio link failure (RLF) information prediction, or time-of-stay (TOS) information prediction
- Capability 3: Capability to support a CHO execution condition using at least one of ((NW-sided) AI/ML-based) cell measurement value (RSRP/RSRQ/SINR) information prediction, handover failure (HOF) information prediction, radio link failure (RLF) information prediction, or time-of-stay (TOS) information prediction
- Capability 4: Capability to support a configuration regarding a CHO-prohibited cell (list) (based on a determination by an (NW-sided) AI/ML) transmitted from a network

Operation 1h-10 may be the same as at least one of operation 1e-10 or operation 1f-10, and the aforementioned description for at least one of operation 1e-10 or operation 1f-10 may be applied for a detailed operation of operation 1h-10.

Operation 1h-15 may be the same as at least one of operation 1e-15 or operation 1f-15, and the aforementioned description for at least one of operation 1e-15 or operation 1f-15 may be applied for a detailed operation of operation 1h-15.

Operation 1h-20 may be the same as at least one of operation 1e-20 or operation 1f-20, and the aforementioned description for at least one of operation 1e-20 or operation 1f-20 may be applied for a detailed operation of operation 1h-20.

Operation 1h-25 may be the same as at least one of operation 1e-25 or operation 1f-25, and the aforementioned description for at least one of operation 1e-25 or operation 1f-25 may be applied for a detailed operation of operation 1h-25.

Operation 1h-30 may be the same as at least one of operation 1e-30 or operation 1f-30, and the aforementioned description for at least one of operation 1e-30 or operation 1f-30 may be applied for a detailed operation of operation 1h-30.

Operation 1h-35 may be the same as at least one of operation 1e-35 or operation 1f-35, and the aforementioned description for at least one of operation 1e-35 or operation 1f-35 may be applied for a detailed operation of operation 1h-35.

Operation 1h-40 may be the same as at least one of operation 1e-40 or operation 1f-40, and the aforementioned description for at least one of operation 1e-40 or operation 1f-40 may be applied for a detailed operation of operation 1h-40.

In operation 1h-45, the UE may perform cell measurement reporting (still as in operation 1h-10).

In operation 1h-50, the base station may calculate an AI/ML predicted value (e.g., a HOF probability, a RLF probability, and/or TOS) of the UE (for each candidate cell). The base station may calculate the AI/ML predicted value, based on the cell measurement reporting of the UE (1h-10 and 1h-40). As a result, the base station may select a cell for which CHO execution is (temporarily) prohibited (e.g., a CHO-prohibited cell). For example, when the base station determines that a predicted HOF probability for a candidate cell is high, a predicted RLF probability for the candidate cell is high, predicted TOS for the candidate cell is short, or a predicted cell measurement value (RSRP/RSRQ/SINR) for the candidate cell is poor, the base station may (temporarily) configure the cell as a CHO-prohibited cell.

In operation 1h-55, the base station may transmit the CHO-prohibited cell (list) to the UE (e.g., through an RRC reconfiguration message). According to an embodiment of the disclosure, the base station may configure, for the UE, a timer length for a prohibition time for each CHO-prohibited cell.

Operation 1h-60 may be the same as at least one of operation 1e-40 or operation 1f-40, and the aforementioned description for at least one of operation 1e-40 or operation 1f-40 may be applied for a detailed operation of operation 1h-60. The UE may evaluate whether a CHO execution condition is satisfied for remaining candidate cells excluding the CHO-prohibited cell (received from the base station). According to an embodiment of the disclosure, when receiving the CHO-prohibited cell and the timer length for the prohibition time in 1h-55, the UE may start a timer. When the timer is running, the UE may regard the corresponding cell as a CHO-prohibited cell. The timer may expire after a time configured by the base station, and after the expiration, the UE may no longer regard the corresponding cell as a CHO-prohibited cell. When new timer information for the cell is received from the base station while the timer is running, the running timer may be stopped and a new timer may be started.

Operation 1h-65 may be the same as at least one of operation 1e-45 or operation 1f-45, and the aforementioned description for at least one of operation 1e-45 or operation 1f-45 may be applied for a detailed operation of operation 1h-65.

Operation 1h-70 may be the same as at least one of operation 1e-50 or operation 1f-50, and the aforementioned description for at least one of operation 1e-50 or operation 1f-50 may be applied for a detailed operation of operation 1h-70.

Operation 1h-75 may be the same as at least one of operation 1e-55 or operation 1f-55, and the aforementioned description for at least one of operation 1e-55 or operation 1f-55 may be applied for a detailed operation of operation 1h-75.

According to an embodiment of the disclosure, a process in which a UE is configured with a prediction-based CHO execution condition and determines whether the condition is satisfied (e.g., 1f-40) may be an operation requiring a predetermined time. For example, depending on an AI/ML model used by the UE, the UE may not be able to calculate a predicted cell measurement value, event, or probability within a short time. In order to prepare for a situation where the UE is unable to calculate a predicted cell measurement value, event, or probability within a short time, a base station may configure a timer (e.g., by configuring a timer length) for the UE. The UE may start the timer when checking the (prediction-based) CHO execution condition, and may stop the timer when determination of the CHO execution condition is completed (e.g., when completely determining whether the CHO execution condition is satisfied or not satisfied). When the timer expires (i.e., when failing to check the CHO execution condition within a configured timer time), the UE may fall back to an actual measurement value-based CHO execution condition (e.g., configured by a network), and may determine whether the actual measurement value-based CHO execution condition is satisfied.

According to an embodiment of the disclosure, upon expiration of the timer, the UE may report to the base station that the timer has expired or that the UE has failed to determine the CHO execution condition within the limited timer time (e.g., through a MeasurementReport message, a UEInformationResponse message or a UEAssistanceInformation message). According to an embodiment of the disclosure, the timer length may be a fixed value defined in a standard.

According to an embodiment of the disclosure, an operation in which the UE derives a predicted value (e.g., an HOF probability, an RLF probability, and/or TOS) for a candidate cell (e.g., 1g-45) may be an operation requiring a predetermined time. For example, depending on an AI/ML model used by the UE, the UE may not be able to calculate a HOF probability within a short time. In order to prepare for a situation where the UE is unable to calculate a predicted cell measurement value, event, or probability within a short time, a base station may configure a timer (e.g., by configuring a timer length) for the UE. The UE may start the timer when calculating (starting) the predicted value for the candidate cell, and may stop the timer when the predicted value is derived. When the timer expires (i.e., when failing to derive the predicted value within a configured timer time), the UE may regard the candidate cell as a CHO-prohibited cell, and may not perform a handover to the cell regarded as the CHO-prohibited cell. The handover to the cell regarded as the CHO-prohibited cell may not be performed because the failure to derive the predicted value may subsequently cause a problem (e.g., HOF, RLF, or short TOS) upon the handover to the cell.

According to an embodiment of the disclosure, when the timer expires (i.e., when failing to derive the predicted value within the configured timer time), the UE may not regard the candidate cell for which derivation of the predicted value has failed within the timer time as a CHO-prohibited cell. Not regarding the candidate cell for which the derivation of the predicted value has failed within the timer time as the CHO-prohibited cell may be to provide the UE with an opportunity to perform a handover to the cell when an actual value-based CHO condition is satisfied.

According to an embodiment of the disclosure, upon expiration of the timer, the UE may report to the base station that the timer has expired or that the UE has failed to derive the predicted value within the limited timer time (e.g., through a MeasurementReport message, a UEInformationResponse message or a UEAssistanceInformation message). According to an embodiment of the disclosure, the timer length may be a fixed value defined in a standard.

According to an embodiment (e.g., FIG. 1G and FIG. 1H) of the disclosure, in the operation of the UE or the base station, a CHO-allowed cell may be defined/used for the same purpose instead of a CHO-prohibited cell. For example, instead of an operation in which the UE determines or is configured with a CHO-prohibited cell and does not perform a CHO to the cell, the UE may determine or be configured with a CHO-allowed cell and perform a CHO (only) to the cell.

FIG. 1I illustrates a structure of a UE according to an embodiment of the disclosure.

Referring to FIG. 1I, the UE may include a radio frequency (RF) processor 1i-10, a baseband processor 1i-20, a storage 1i-30, and a controller 1i-40.

The RF processor 1i-10 may perform functions for transmitting/receiving signals through a radio channel, such as signal band conversion and amplification. That is, the RF processor 1i-10 may up-convert a baseband signal provided from the baseband processor 1i-20 to an RF band signal, may transmit the same through an antenna, and may down-convert an RF band signal received through the antenna to a baseband signal. For example, the RF processor 1i-10 may include a transmission filter, a reception filter, an amplifier, a mixer, an oscillator, a digital-to-analog converter (DAC), an analog-to-digital converter (ADC), and the like. Although only one antenna is illustrated in the drawing, the UE may include multiple antennas. In addition, the RF processor 1i-10 may include multiple RF chains. Furthermore, the RF processor 1i-10 may perform beamforming. For the beamforming, the RF processor 1i-10 may adjust the phase and magnitude of signals transmitted/received through multiple antennas or antenna elements, respectively. In addition, the RF processor may perform MIMO, and may receive multiple layers when performing an MIMO operation.

The baseband processor 1i-20 may perform functions of conversion between baseband signals and bitstrings according to the physical layer specifications of the system. For example, during data transmission, the baseband processor 1i-20 may encode and modulate a transmitted bitstring to generate complex symbols. In addition, during data reception, the baseband processor 1i-20 may demodulate and decode a baseband signal provided from the RF processor 1i-10 to restore a received bitstring. For example, when following the orthogonal frequency division multiplexing (OFDM) scheme, during data transmission, the baseband processor 1i-20 may encode and modulate a transmitted bitstring to generate complex symbols, may map the complex symbols to subcarriers, and may configure OFDM symbols through inverse fast Fourier transform (IFFT) operation and cyclic prefix (CP) insertion. In addition, during data reception, the baseband processor 1i-20 may split a baseband signal provided from the RF processor 1m-10 at the OFDM symbol level, may restore signals mapped to subcarriers through a fast Fourier transform (FFT) operation, and may restore a received bitstring through demodulation and decoding.

The baseband processor 1i-20 and the RF processor 1i-10 may transmit and receive signals as described above. Therefore, the baseband processor 1i-20 and the RF processor 1i-10 may be referred to as a transmitter, a receiver, a transceiver, or a communication unit. Furthermore, at least one of the baseband processor 1i-20 and the RF processor 1i-10 may include multiple communication modules to support multiple different radio access technologies. In addition, at least one of the baseband processor 1i-20 and the RF processor 1i-10 may include different communication modules to process signals in different frequency bands. For example, the different radio access technologies may include a wireless LAN (e.g., IEEE 802.11), a cellular network (e.g., LTE), etc. In addition, the different frequency bands may include a super high frequency (SHF) (e.g., 2NRHz) band and a millimeter wave (mmWave) (e.g., 60GHz) band.

The storage 1i-30 may store basic programs, application programs, and data, such as configuration information, for the operation of the UE. The storage 1i-30 may provide the stored data at the request of the controller 1i-40.

The controller 1i-40 controls the overall operation of the UE. For example, the controller 1i-40 may transmit/receive signals through the baseband processor 1i-20 and the RF processor 1i-10. In addition, the controller 1i-40 records data in the storage 1i-30 and reads the data from the storage 1i-30. To this end, the controller 1i-40 may include at least one processor. For example, the controller 1i-40 may include a communication processor (CP) that performs control for communication and an application processor (AP) that controls higher layers such as application programs, and may include a multi-connectivity processor 1i-42 as illustrated in the drawing.

FIG. 1J illustrates a structure of a base station according to an embodiment of the disclosure.

Referring to FIG. 1J, the base station according to an embodiment of the disclosure may include an RF processor 1j-10, a baseband processor 1j-20, a backhaul communicator 1j-30, a storage 1j-40, and a controller 1j-50.

The RF processor 1j-10 may perform functions for transmitting/receiving signals through a radio channel, such as signal band conversion and amplification. That is, the RF processor 1j-10 may up-convert a baseband signal provided from the baseband processor 1j-20 to an RF band signal, may transmit the same through an antenna, and may down-convert an RF band signal received through the antenna to a baseband signal. For example, the RF processor 1j-10 may include a transmission filter, a reception filter, an amplifier, a mixer, an oscillator, a DAC, and an ADC. Although only one antenna is illustrated in the drawing, the base station may include multiple antennas. In addition, the RF processor 1j-10 may include multiple RF chains. Furthermore, the RF processor 1j-10 may perform beamforming. For the beamforming, the RF processor 1j-10 may adjust the phase and magnitude of signals transmitted/received through multiple antennas or antenna elements, respectively. The RF processor may transmit one or more layers to perform a downward MIMO operation.

The baseband processor 1j-20 may perform functions of conversion between baseband signals and bitstrings according to the physical layer specifications of a first radio access technology. For example, during data transmission, the baseband processor 1j-20 may encode and modulate a transmitted bitstring to generate complex symbols. In addition, during data reception, the baseband processor 1j-20 may demodulate and decode a baseband signal provided from the RF processor 1j-10 to restore a received bitstring. For example, when following the OFDM scheme, during data transmission, the baseband processor 1j-20 may encode and modulate a transmitted bitstring to generate complex symbols, may map the complex symbols to subcarriers, and may configure OFDM symbols through IFFT operation and CP insertion. In addition, during data reception, the baseband processor 1j-20 may split a baseband signal provided from the RF processor 1j-10 at the OFDM symbol level, may restore signals mapped to subcarriers through FFT operation, and may restore a received bitstring through demodulation and decoding. The baseband processor 1j-20 and the RF processor 1j-10 may transmit and receive signals as described above. Therefore, the baseband processor 1j-20 and the RF processor 1j-10 may be referred to as a transmitter, a receiver, a transceiver, or a communication unit.

The backhaul communication unit 1j-30 provides an interface for communicating with other nodes in the network. That is, the backhaul communication unit 1j-30 converts bitstrings transmitted from the main base station to other nodes, for example, an auxiliary base station, a core network, etc., into physical signals, and converts physical signals received from the other nodes into bitstrings.

The storage 1j-40 may store basic programs, application programs, and data, such as configuration information, for the operation of the main base station. Particularly, the storage 1j-40 may store information regarding a bearer allocated to a connected UE, a measurement result reported from the connected UE, and the like. In addition, the storage 1j-40 may store information serving as criteria for determining whether to provide multi-connectivity to a UE or to suspend same. In addition, the storage 1j-40 may provide the stored data at the request of the controller 1j-50.

The controller 1j-50 controls the overall operation of the main base station. For example, the controller 1j-50 transmits/receives signals through the baseband processor 1j-20 and the RF processor 1j-10 or through the backhaul communication unit 1j-30. In addition, the controller1j-50 records data in the storage 1j-40 and reads the data from the storage 1j-40. To this end, the controller 1j-50 may include at least one processor, and may include a multi-connectivity processor 1j-52 as illustrated in the drawing.

The embodiments of the disclosure described and shown in the specification and the drawings are merely specific examples that have been presented to easily explain the technical contents of the disclosure and help understanding of the disclosure, and are not intended to limit the scope of the disclosure. That is, it will be apparent to those skilled in the art that other variants based on the technical idea of the disclosure may be implemented.

In addition, the above respective embodiments may be employed in combination, as necessary. As an example, a part of one embodiment of the disclosure may be combined with a part of another embodiment to operate a base station and a terminal. In addition, the embodiments of the disclosure may also be applied to other communication systems and other variants based on the technical idea of the embodiments may also be implemented. For example, the embodiments may be applied to LTE, 5G, NR, or 6G systems. Therefore, the scope of the disclosure should not be defined as being limited to the embodiments set forth herein, but should be defined by the appended claims and equivalents thereof.

## Claims

1. A method of a terminal in a wireless communication system, the method comprising:
receiving, from a source base station, conditional handover configuration information comprising at least one candidate base station for a conditional handover and a conditional handover execution condition comprising a measurement-based condition and a prediction-based condition for each candidate base station;
determining a candidate base station, which satisfies both the measurement-based condition and the prediction-based condition among the at least one candidate base station, as a target base station; and
performing a handover to the target base station.

2. The method of claim 1, wherein the determining of the candidate base station, which satisfies both the measurement-based condition and the prediction-based condition among the at least one candidate base station, as the target base station comprises:
determining whether the at least one candidate base station satisfies the measurement-based condition;
determining whether triggered cells satisfying the measurement-based condition satisfy the prediction-based condition; and
determining the candidate base station, which satisfies the prediction-based condition among the triggered cells, as the target base station, and
wherein the candidate base station satisfying the prediction-based condition among the triggered cells is configured as a prohibited cell.

3. The method of claim 1, further comprising transmitting terminal capability information comprising a prediction-related capability to the source base station.

4. The method of claim 1, wherein the prediction-based condition comprises a condition related to at least one of a handover failure probability, a radio link failure probability, and a predicted time of stay (TOS).

5. A method of a source base station in a wireless communication system, the method comprising:
receiving, from a terminal, a measurement result and a prediction result corresponding to the measurement result;
determining a conditional handover for the terminal, based on the measurement result and the prediction result;
receiving, from each of at least one candidate base station, configuration information for execution of a conditional handover;
generating a conditional handover execution condition comprising a measurement-based condition and a prediction-based condition for each candidate base station, based on the measurement result, the prediction result, the at least one candidate base station, and the configuration information for execution of the conditional handover for each candidate base station; and
transmitting, to the terminal, conditional handover configuration information comprising the at least one candidate base station and the conditional handover execution condition for each candidate base station.

6. The method of claim 5, further comprising receiving terminal capability information comprising a prediction-related capability from the terminal.

7. The method of claim 5, wherein the prediction-based condition comprises a condition related to at least one of a handover failure probability, a radio link failure probability, and a predicted time of stay (TOS).

8. A terminal in a wireless communication system, the terminal comprising:
a transceiver; and
a controller connected to the transceiver,
wherein the controller is configured to:
receive, from a source base station, conditional handover configuration information comprising at least one candidate base station for a conditional handover and a conditional handover execution condition comprising a measurement-based condition and a prediction-based condition for each candidate base station;
determine a candidate base station, which satisfies both the measurement-based condition and the prediction-based condition among the at least one candidate base station, as a target base station; and
perform a handover to the target base station.

9. The method of claim 8, wherein the controller is configured to:
determine whether the at least one candidate base station satisfies the measurement-based condition;
determine whether triggered cells satisfying the measurement-based condition satisfy the prediction-based condition; and
determine the candidate base station, which satisfies the prediction-based condition among the triggered cells, as the target base station, and
wherein the candidate base station satisfying the prediction-based condition among the triggered cells is configured as a prohibited cell.

10. The terminal of claim 8, wherein the controller is configured to transmit terminal capability information comprising a prediction-related capability to the source base station.

11. The terminal of claim 8, wherein the prediction-based condition comprises a condition related to at least one of a handover failure probability, a radio link failure probability, and a predicted time of stay (TOS).

12. A source base station in a wireless communication system, the source base station comprising:
a transceiver; and
a controller connected to the transceiver,
wherein the controller is configured to:
receive, from a terminal, a measurement result and a prediction result corresponding to the measurement result;
determine a conditional handover for the terminal, based on the measurement result and the prediction result;
receive, from each of at least one candidate base station, configuration information for execution of a conditional handover;
generate a conditional handover execution condition comprising a measurement-based condition and a prediction-based condition for each candidate base station, based on the measurement result, the prediction result, the at least one candidate base station, and the configuration information for execution of the conditional handover for each candidate base station; and
transmit, to the terminal, conditional handover configuration information comprising the at least one candidate base station and the conditional handover execution condition for each candidate base station.

13. The source base station of claim 12, wherein the controller is configured to receive terminal capability information comprising a prediction-related capability from the terminal.

14. The source base station of claim 12, wherein the prediction-based condition comprises a condition related to at least one of a handover failure probability, a radio link failure probability, and a predicted time of stay (TOS).
